# EUROPÄISCHE PATENTSCHRIFT

(11) **EP 0 752 811 B1**
(45) Veröffentlichungstag und Bekanntmachung des Hinweises auf die Patenterteilung: **26.08.1998**
(21) Anmeldenummer: 95914279.5
(22) Anmeldetag: 28.03.1995
(51) Int. Cl.: A01B 39/16, A01B 69/00

(54) **BEARBEITUNGSMASCHINE FÜR REIHENKULTUREN**
CULTIVATOR FOR ROW CROPS
MACHINE AGRICOLE POUR CULTURES SUR RANG

(30) Priorität: 30.03.1994 DE 4411080
(43) Veröffentlichungstag der Anmeldung: 15.01.1997
(73) Patentinhaber: Hilker, Andreas, 49434 Neuenkirchen-Vörden (DE)
(72) Erfinder: Hilker, Andreas, 49434 Neuenkirchen-Vörden (DE)
(86) Internationale Anmeldenummer: DE9500433
(87) Internationale Veröffentlichungsnummer: WO9526622

(56) Entgegenhaltungen:
- EP-A- 0 357 152
- EP-A- 0 554 732
- DE-A- 4 004 247
- DE-A- 4 039 797
- DE-A- 4 205 231
- DE-U- 9 300 093
- FR-A- 2 118 474
- FR-A- 2 687 532
- GB-A- 2 043 415
- US-A- 3 913 681
- US-A- 4 768 713
- US-A- 4 989 783
- US-A- 5 222 324
- AGRARTECHNIK, Bd.41, Nr.2, 1991, BERLIN, DE Seiten 67 - 68 KLEE ET AL. 'Vergleich verschiedener Wirkprinzipe von automatischen Lenkeinrichtungen im praktischen Feldversuch'
- DATABASE WPI Week 7547, Derwent Publications Ltd., London, GB; AN 75-M5757W [47] & SU,A,439 259 (POLT AGRIC COLL)
- PFLANZENSCHUTZ-PRAXIS, Bd.4, 1992 Seiten 28 - 31 HEIKO ET AL. 'Unkräuter erkennen mit Sensoren ?'
- J. AGRIC. ENGNG RES., Bd.19, 1974 Seiten 101 - 109 HESSE 'An automatic impulse controlled implement control system for plant rows'

## Beschreibung

Die Erfindung bezieht sich auf eine Bearbeitungsmaschine für Reihenkulturen, beispielsweise Mais, Zuckerrüben, Ackerbohnen, wobei jeder Reihe mindestens ein die Positionen der einzelnen Pflanzen in der Reihe erfassender Sensor und eine in Abhängigkeit von dem Signal des Sensors gesteuerte Bearbeitungsvorrichtung zugeordnet sind.

Bei der Pflege von in Kulturen angebauten Pflanzen gehen starke Bemühungen dahin, den Einsatz chemischer Wirkstoffe, d. h. von Kunstdüngern, Herbiziden und Pestiziden, zu minimieren bzw. im Fall der Herbizide möglichst gänzlich zu vermeiden. Hierzu ist es erforderlich, daß die Wirkstoffe gezielt an die einzelnen Pflanzen herangebracht werden, anstelle sie flächig über die gesamte Kultur zu verteilen. Demgegenüber ist es bei einer mechanischen Unkrautbekämpfung erforderlich, möglichst den gesamten Boden zu bearbeiten, wobei nur der unmittelbare Bereich der Nutzpflanzen ausgenommen bleibt.

Bei Reihenkulturen, wie beispielsweise Mais, Zuckerrüben, Ackerbohnen o. dgl., ist es bereits üblich, chemische Wirkstoffe konzentriert im Bereich der Pflanzenreihen aufzubringen und mechanische Unkrautbekämpfungsmaßnahmen im Bereich zwischen den Pflanzenreihen vorzunehmen. Dabei werden Bearbeitungsmaschinen für die gleichzeitige Bearbeitung mehrerer Reihen nebeneinander eingesetzt, die mindestens einen einer zentralen Reihe zugeordneten Sensor aufweisen. Mit diesem Sensor erfolgt die Lenkung der Bearbeitungsmaschinen quer zur Reihenrichtung. Eine solche Bearbeitungsmaschine ist z.B. in der DE-Z: Agrartechnik, 11.01.1994, Seite 24 beschrieben. Als Nachteil verbleibt jedoch, daß bei der mechanischen Unkrautbekämpfung ein durchgängiger Sicherheitsstreifen von typischerweise mehr als 10 cm Breite für die einzelnen Pflanzenreihen verbleibt. In dem Bereich des Sicherheitsstreifens zwischen den Nutzpflanzen wachsende Unkräuter werden von der mechanischen Unkrautbekämpfung nicht erfaßt.

Zur mechanischen Unkrautbekämpfung innerhalb der Sicherneitsstreifen sind Bearbeitungsmaschinen für Reihenkulturen der eingangs beschriebenen Art bekannt.

In dem Prospektblatt 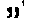 Sensorgesteuerte Jätemaschine" (Technologieentwicklung Steffen) ist bei einer derartigen Bearbeitungsmaschine jeder Reihe ein die Positionen der einzelnen Pflanzen in der Reihe von oben erfassender Ultraschallsensor zugeordnet. In Abhängigkeit von dem Signal des Sensors wird ein um eine senkrechte Achse rotierendes Jätewerkzeug zwischen die einzelnen Pflanzen geschwenkt, um die dort vorhandenen Unkräuter auszureißen oder von ihren Wurzeln abzutrennen. Aufgrund der relativ unscharfen Sensorik, die von oben auf die Pflanzenreihe gerichtet, nur bedingt eine Reihennachführung leisten kann sowie aufgrund der radialen Schwenkbewegung des Jätewerkzeugs, die bei gleichzeitiger Vorfahrt des Schleppers auf dem Boden als Zickzackbewegung abgebildet wird, ist eine Unkrautbekämpfung hiermit nur bedingt möglich.

Die US - A - 3 913 681 offenbart eine Bearbeitungsmaschine für Reihenkulturen, wobei die Bearbeitungsvorrichtungen (87) in Abhängigkeit von einer Sensorik (H) ein etwa horizontal geführtes, zwischen den Pflanzen der Reihe flach in den Boden eingreifendes Hackmesser (81) aufweisen. Die Bearbeitung wird über einen taktilen Sensor (H) ausgelöst. Das gleichförmig angetriebene und rotierende Jätewerkzeug (81) wird hydraulisch in die Pflanzenreihe geschwenkt. Während die zerkleinernde Wirkung dieses Werkzeugs (81) positiv zu sehen ist, können hierdurch Beschädigungen insbesondere an jüngeren Pflanzen auftreten, so daß ein weiter Sicherneitsbereich um die Pflanzen einzuhalten ist.

Der Erfindung liegt die Aufgabe zugrunde, eine Bearbeitungsmaschine für Reihenkulturen der eingangs beschriebenen Art aufzuzeigen, mit der auf Basis einer sensorischen Unterscheidung zwischen Nutzpflanzen und Unkräutern entweder nur die einzelnen Pflanzen in der Reihe bearbeitet werden oder der gesamte Boden bis auf einen engen Sicherneitsbereich um die einzelnen Pflanzen bearbeitet wird.

Erfindungsgemäß wird diese Aufgabe durch das kennzeichnende Merkmal des Anspruches 1 gelöst. Die jeder Reihe der Bearbeitungsmaschine zugeordnete Bearbeitungsvorrichtung ist ein etwa horizontal geführtes, zwischen den einzelnen Pflanzen der Reihe flach in den Boden eingreifendes Hackmesser. Dieses Hackmesser trennt die Unkräuter knapp unterhalb der Bodenoberfläche von ihren Wurzeln ab. Hiermit wird das jeweilige Unkraut in aller Regel dauerhaft zerstört, d.h. ein erneutes Auswachsen ist nicht zu befürchten. Das nur flach in den Boden eingreifende Hackmesser verhindert auch bei Einsatz nah an den Nutzpflanzen eine Zerstörung von nah an der Bodenoberfläche verlaufenden Wurzeln der Nutzpflanzen.

Eine wesentliche und wirkungsvolle Arbeitsweise des Hackmessers läßt sich dadurch erreichen, daß das Hackmesser an einem angetriebenen Rotor gelagert ist, und daß das Hackmesser mit einer koaxialen zu der Drehachse des Rotors angeordneten Welle verbunden ist.

In einfacher Weise wird das erfindungsgemäße Hacken in der Reihe dadurch erreicht, daß die Welle wechselweise feststellbar bzw. an dem Antrieb des Rotors ankuppelbar ist. Dadurch, daß das Hackmesser im festgestellten Zustand der Welle eine seitliche, über den Rotor hinaus gehende Hackbewegung vollführt und im angekuppelten Zustand der Welle vorzugsweise innerhalb des Rotors mit diesem umläuft, läßt sich in einfacher Weise das Hadken in der Reihe verwirklichen, wobei der Rotor neben der Reihe angeordnet sein kann.

Dabei versteht es sich, daß das Ankuppeln bzw. Feststellen der Welle in Abhängigkeit von dem Signal des Sensors erfolgt. Hierpei kann bei einem der Bearbeitungsvorrichtung vorgelagerten Sensor ein zusätzlicher Weggeber und eine von dessen Wegsignal gesteuerte Verzögerungseinrichtung für das Signal des Sensors vorgesehen sein.

Um das Hackmesser im räumlichen Bezug zur Pflanze möglichst exakt hacken zu lassen, ist vorgesehen, daß das Hackmesser gegenüber dem Rotor mittels einer Justiereinrichtung in seiner Arbeitsrichtung einstellbar ist. Hierdurch wird die Effektivität der Bearbeitungsmaschine erheblich verbessert, weil die Arbeitsbewegung des Hackmessers präzise auf die Fahrgeschwindigkeit abgestimmt werden kann.

Um eine Sicherungseinrichtung für das Hackmesser der Bodenbearbeitungsmaschine zu schaffen, ist vorgesehen, daß das Hackmesser gegenüber der koaxial umlaufenden Welle und/oder dem Rotor begrenzt federnd oder elastisch angeordnet ist. Dieses läßt sich dadurch erreichen, daß zwischen der Welle und dem Hackmesser zumindest ein elastisches Element angeordnet ist. Somit kann das Hackmesser Steinen oder anderen harten Gegenständen ausweichen. Das Hackmesser ist somit gegen Zerbrechen an harten Gegenständen geschützt, die Stöße werden nicht mit voller Wucht auf das Getriebe übertragen. Auch das Getriebe wird weniger belastet. Darüber hinaus wird erreicht, daß das Hackmesser weniger verschleißt. Durch die elastische und federnde Aufhängung wird im Betrieb eine vertikale Pendelbewegung des Messers und ein Teil der elastisch aufgehängten Halterung erreicht, so daß Unkraut und Bodenteile schräg hochgeschleudert werden, so daß die Bekämpfungswirkung verbessert wird. Es ergibt sich eine Selbstreinigung des Messers.

Weitere Einzelheiten der Erfindung sind den übrigen Unferansprüchen, der Beispielsbeschreibung und den Zeichnungen zu entnehmen.

Die Vorrichtung wird im folgenden anhand eines Ausführungsbeispiels einer Bearbeitungsmaschine zur mechanischen Unkrautbekämpfung in Maisreihenkulturen näher erläutert und beschrieben

Die Figuren zeigen:
- Figuren 1 und 2: eine Drauf- und eine Seitenansicht einer zweireihigen Bearbeitungsmaschine,
- Figuren 3 und 4: zwei Detailansichten einer Bearbeitungsvorrichtung der Bearbeitungsmaschine gemäß den Figuren 1 und 2,
- Figur 5: eine Detailansicht einer weiteren Bearbeitungsvorrichtung in perspektivischer Darstellung,
- Figur 6: die elastische oder federnde Anordnung des Hackmessers an der Welle im Schnitt und in Prinzipdarstellung.

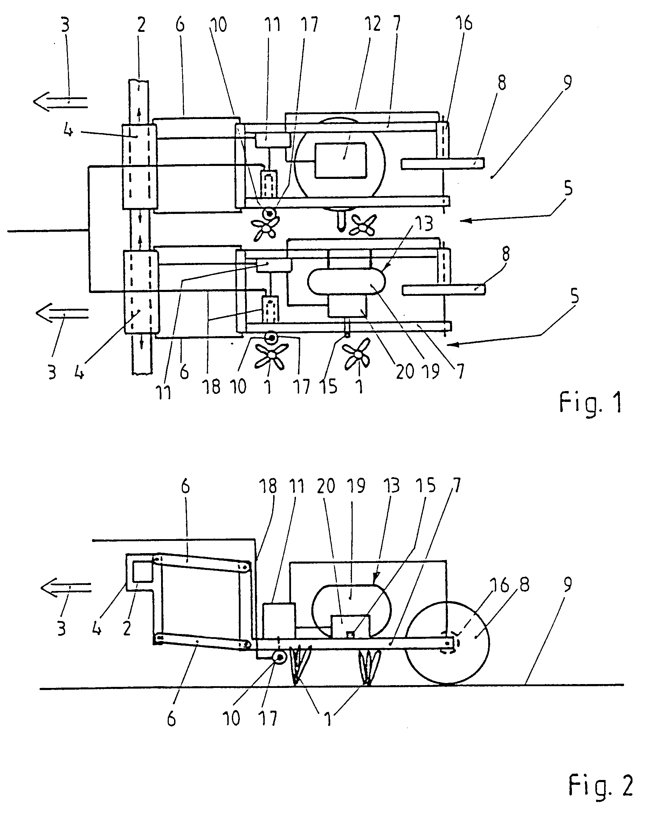

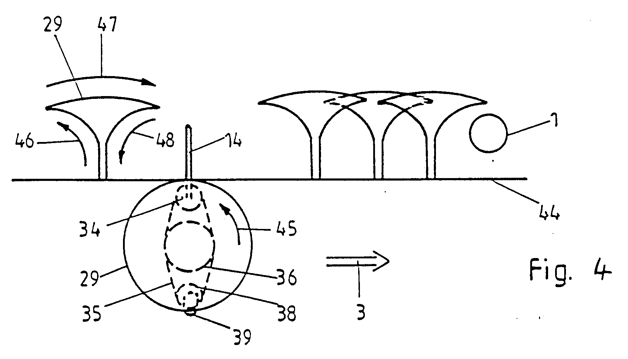

Die in **Figur 1** in einer Draufsicht dargestellte Bearbeitungsmaschine für in Reihenkulturen angebaute Pflanzen 1 weist einen Tragrahmen 2 auf. Der Tragrahmen 2 kann seinerseits an einem Schlepper gelagert sein und/oder ein eigenes Fahrwerk aufweisen. An dem Tragrahmen 2 sind quer zu der durch Pfeile 3 angedeuteten Fahrrichtung der Bearbeitungsmaschine gegenüber dem Tragrahmen 2 verfahrbare Lenkrahmen 4 gelagert. Jeder Lenkrahmen 4 ist einer Reihe 5 der Pflanzen 1 zugeordnet. An jedem Lenkrahmen 4 ist über Parallelogrammlenker 6 ein Schwenkrahmen 7 angelenkt, der sich über ein Stützrad 8 auf dem Boden 9 abstützt. An den Schwenkrahmen 7 ist jeweils ein die einzelnen Pflanzen 1 erfassender Sensor 10 in Bodennähe angeordnet. Dabei ist der Sensor 10 etwa horizontal und quer zur Fahrrichtung der Bearbeitungsmaschine ausgerichtet. Den Sensoren 10 ist jeweils eine Auswerte- und Steuereinrichtung 11 zugeordnet, in der das Signal des Sensors verarbeitet wird.
Die Auswerte- und Steuereinrichtungen steuern die Bearbeitungsvorrichtung 12 bzw. 13. Dabei weist die Bearbeitungsvorrichtung 12 ein Hackmesser 14 und die Bearbeitungsvorrichtung 13 eine Sprühdüse 15 für einen chemischen Wirkstoff auf. Mit dem Hackmesser 14 erfolgt eine mechanische Unkrautbekämpfung zwischen den einzelnen Pflanzen 1 einer Reihe 5. Mit der Sprühdüse 15 werden die einzelnen Pflanzen 1 einer Reihe 5 mit Herbiziden besprüht.

Um im ersten Fall die Pflanzen 1 nicht mit dem Hackmesser 14 zu beschädigen, und um im zweiten Fall tatsächlich nur die Pflanzen 1 mit dem Herbizid zu besprühen, ist es erforderlich, die Positionen der Pflanzen 1 in den Reihen 5 genau zu bestimmen.

Hierzu berücksichtigen die Auswerte- und Steuereinrichtungen das Wegsignal von mit den Stützrädern 8 verbundenen Weggebern 16. Um die Sensoren 10 vor Verschmutzung zu schützen, ist ihnen jeweils eine Ausblasöffnung 17 zugeordnet, die den jeweiligen Sensor 10 ringförmig umgibt. Dabei ist der Sensor 10 in einer Zuführleitung 18 zu der Ausblasöffnung 17 angeordnet. Die aus der Ausblasöffnung 17 ausströmende Druckluft verbläst nicht nur Schmutz sondern auch Unkräuter bzw. seitlich abstehende Blätter der Nutzpflanzen aus dem Erfassungsbereich des Sensors 10, so daß nur die stabileren Ansätze der Nutzpflanzen von dem Sensor 10 erfaßt werden.

Sofern von dem Sensor 10 Steine oder ähnliche Hindernisse, die nicht verblasbar sind, erfaßt werden, führt dies vorteilhafterweise dazu, daß das Hackmesser 14 zurückgehalten wird und nicht gegen diese Hindernisse schlägt. Die Zuführleitungen 18 können mit dem Kompressor eines Schleppers oder einer anderen Druckluftquelle verbunden sein. Die Auswerte- und Steuereinrichtungen 11 können auch zum gezielten Verfahren der Lenkrahmen 4 quer zur Fahrrichtung der Bearbeitungsmaschine in Richtung der Pfeile vorgesehen sein. Voraussetzung hierfür ist, daß das Signal des jeweiligen Sensors 10 von seiner Entfernung zu der gerade erfaßten Pflanze 1 abhängig ist. Durch das von den Auswerte- und Steuereinrichtungen 11 gesteuerte Verfahren der Lenkrahmen 4 in Richtung der Pfeile kann ein konstanter seitlicher Abstand der Schwenkrahmen 7 zu den Pflanzen 1 der jeweiligen Reihe 5 eingehalten werden.

**Figur 2** zeigt die Bearbeitungsmaschine gemäß Figur 1 in der Seitenansicht, wobei nur der untere Schwenkrahmen 7 mit der Bearbeitungsvorrichtung 13 wiedergegeben ist. Die Bearbeitungsvorrichtung 13 weist neben der Sprühdüse 15 einen Tank 19 und eine Pumpe 20 für das Pestizid auf. Die Pumpe 20 wird von der Auswerte- und Steuereinrichtung 11 genau dann angesteuert, wenn sich die Sprühdüse 15 über einer zuvor vom Sensor 10 erfaßten Pflanze 1 befindet.

So entwickelt eine vergleichsweise geringe Menge Pestizid einen hohen Wirkungsgrad bei der Schädlingsbekämpfung in der bearbeiteten Reihenkultur.

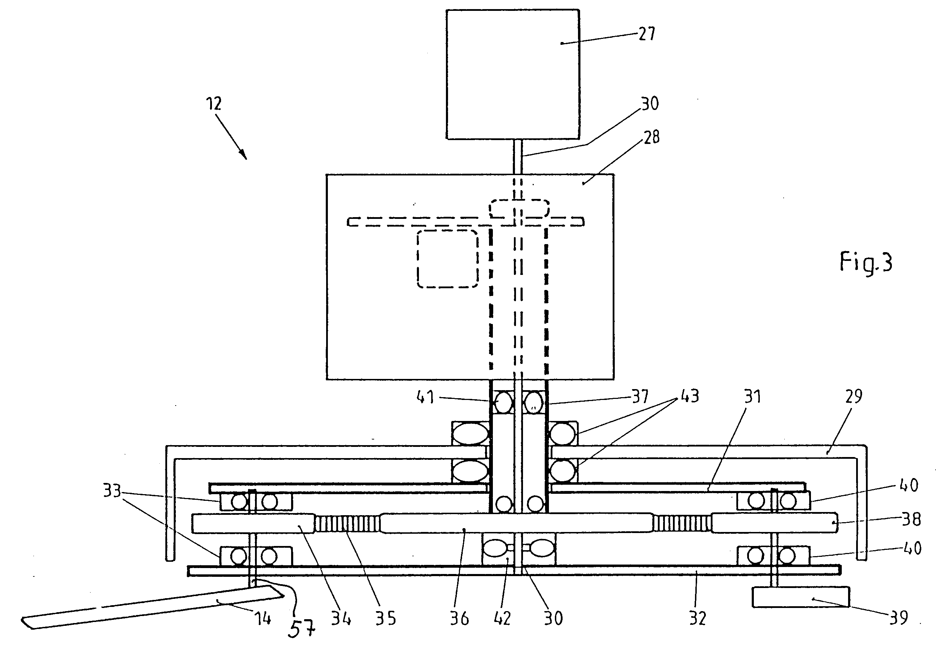

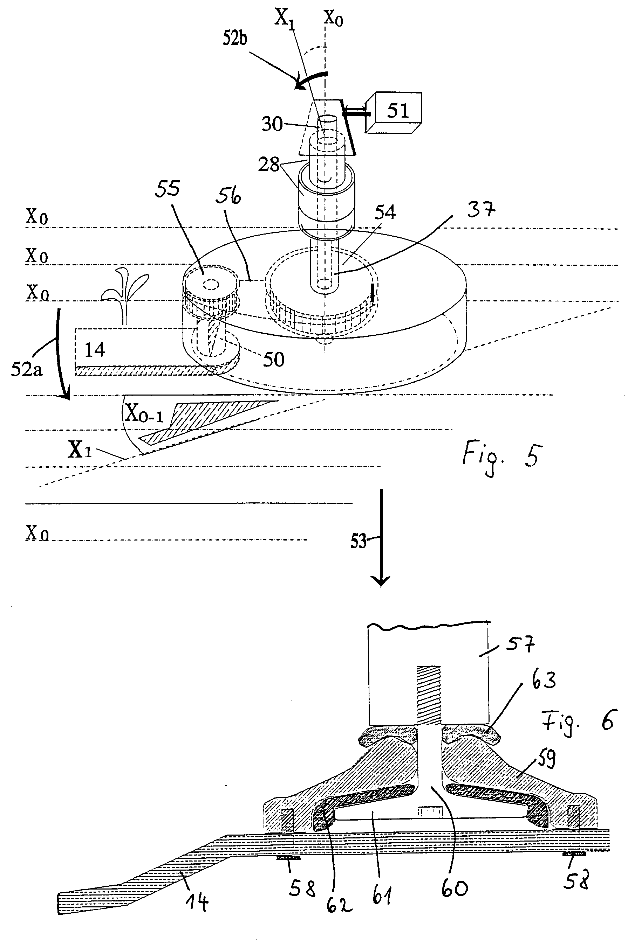

In den **Figuren 3 und 4** ist die Bearbeitungsvorrichtung 12 gemäß den Figuren 1 und 2 im Detail dargestellt. Dabei gibt der Querschnitt gemäß Figur 5 einen Motor 27, eine Kupplung 28 und eine Abdeckung 29 wieder, die jeweils fest an dem hier nicht dargestellten Schwenkrahmen 7 gelagert sind. Eine vom Motor 27 angetriebene Antriebswelle 30 tritt durch die Kupplung 28 hindurch und ist unterhalb der Abdeckung 29 drehfest mit einem Rotor 31, 32 verbunden. Der Rotor 31, 32 besteht aus einer oberen Schwungscheibe 31 und einer unteren Schwungscheibe 32. Mit Abstand zu der Antriebswelle 30 ist an dem Rotor 31, 32 das Hackmesser 14 schwenkbar gelagert. Hierzu sind Lager 33 vorgesehen. Dabei ist das Hackmesser 14 mittels einer ihm gegenüber drehfesten Zahnscheibe 34 und eines Zahnriemens 35 sowie einer zentralen Zahnscheibe 36 mit einer koaxial zu der Antriebswelle 30 angeordneten Hohlwelle 37 getrieblich verbunden.

Die Zahnscheiben 34 und 36 sind zwischen den beiden Schwungscheiben 31 und 32 des Rotors 31, 32 angeordnet. Dabei schließt der Zahnriemen 35 noch eine zweite äußere Zahnscheibe 38 ein, mit der ein ebenfalls schwenkbar am Rotor 31, 32 gelagertes, exzentrisches Ausgleichsgewicht 39 für das Hackmesser 14 drehfest verbunden ist. Die Lagerung des Ausgleichsgewichts 39 an dem Rotor 31, 32 erfolgt über Lager 40. Zwischen der Hohlwelle 7 und der Antriebswelle 30 sind Lager 41 vorgesehen. Zwischen der zentralen Zahnscheibe 36 und der unteren Schwungscheibe 32 ist ein Drucklager 42 angeordnet. Weitere Lager 43 sind zwischen der Hohlwelle 37 und der Abdeckung 29 vorgesehen.

Die Kupplung 28 erlaubt zwei Zustände der Hohlwelle 37. In dem einen Zustand ist die Hohlwelle 37 festgestellt, und in dem anderen Zustand ist die Hohlwelle 37 mit der Antriebswelle 30 drehfest verbunden. Im ersten Fall vollführt das Hackmesser 14 eine seitliche über die Abdeckung 29 hinausgehende Hackbewegung. Dabei hängt der Austrittspunkt des Hackmessers 14 von der momentanen Stellung der Hohlwelle 37 ab. Die Form der Hackbewegung wird durch das Übersetzungsverhaltnis zwischen den Zahnscheiben 36 und 34 bzw. 38 bestimmt.

In dem zweiten Fall lauft das Hackmesser 14 mit dem Rotor 31, 32 um, ohne seine Relativstellung gegenüber dem Rotor zu verändern. Diese Relativstellung hängt von der Relativstellung der Hohlwelle 37 zu der Antriebswelle 30 ab.

Konkret werden die Stellungen der Hohlwelle 37 so gewählt, daß das Hackmesser 14 bei festgestellter Hohlwelle 37 eine seitliche Hackbewegung vollführt, wie sie in Figur 6 dargestellt ist. Demgegenüber wird durch geeignete Wahl der Relativstellung zwischen der Hohlwelle 37 und der Antriebswelle 30 in der angekuppelten Stellung der Hohlwelle 37 dafür gesorgt, daß das Hackmesser 14 unterhalb der Abdeckung 29 umläuft. In Figur 6 gibt der Pfeil 3 die Fahrtrichtung der Bearbeitungsmaschine gemäß Figur 1 an. Dabei markiert die Linie 44 die Außenkante des Gehäuses 29. Ein Pfeil 45 steht für die Drehrichtung des Rotors 31, 32. Pfeile 46 bis 48 zeigen die Richtung einer Kurve 49 an, die die Spitze des Hackmessers 14 bei der seitlichen Hackbewegung vollführt. Dabei steuert die Auswerte- und Steuereinrichtung 11 die Kupplung 28 derart an, daß eine vom Sensor 10 erfaßte Pflanze 1 von dem Hackmesser 14 verschont bleibt. Aus der vorangegangenen Beschreibung von Figur 5 ergibt sich, daß die Auswerte- und Steuereinrichtung 11 bei der Ansteuerung der Kupplung 28 stets die Relativstellung der Hohlwelle 37 zu der Antriebswelle 30 im angekuppelten Zustand der Hohlwelle und die Winkelstellung der Hohlwelle 37 im festgestellten Zustand der Hohlwelle berücksichtigt.

Das Hackmesser 14 wird bei der Hackbewegung gemäß der Kurve 49 nur flach durch den Boden 1 hindurchgeführt, d. h., es greift nur wenig in den Boden ein. Hierdurch wird eine Beschädigung von flachen Wurzeln der Pflanzen 1 vermieden. Unkräuter werden jedoch zuverlässig von ihren Wurzeln abgetrennt oder ausgerissen. Ein Nachwachsen der Unkräuter ist dabei nicht zu befürchten.

Die **Figur 5** zeigt die Bearbeitungsvorrichtung in perspektivischer Darstellung. Die Welle wird von einer Kraftquelle 27 angetrieben. Hierdurch rotiert die an der Hohlwelle 37 befestigte Scheibe 54. In dem Gehäuse ist die Welle 50 drehbar gelagert. Die Welle 50 trägt auf ihrer unteren Seite das Hackmesser 14. Auf der Oberseite ist drehfest die Scheibe 55 angeordnet. Um die Scheibe 55 der Welle 50 und die Scheibe 54 der Welle 37 ist ein Zahnriemen 56 geschlungen.

Die Kupplung 28 wird mit einer Steuereinrichtung 51 derart verbunden, daß abhängig von Signalen eines Sensors 10 die Kupplung 28 um die durch sie hindurch tretende Antriebswelle 30 sowie mit der davon angetriebenen Hohlwelle 37 und Scheibe 54 aus der Position X0 geschwenkt wird, wie durch die Pfeile 52a und 52b angedeutet ist. Das Hackmesser 14 wird in einer neuen Position X1 im Bezug zum Pflanzenstandort entsprechend des Winkels X1 neu ausgerichtet. Durch Variationen der Pendelbewegung X0 wird der Vorlauf X0-1 des Hackmessers 14 verstellt, z.B. in Abhängigkeit von der gemessenen Vorfahrgeschwindigkeit des Schleppers in Pfeilrichtung 53.

An Stelle der Kupplung 28 kann ersatzweise eine oder mehrere Antriebsvorrichtungen eingesetzt werden, welche die Antriebswelle 30 sowie die Hohlwelle 37 verschieden und variierbar antreiben, so daß z.B. die Größe der Zahnscheibe 34, 36, 38, die gemäß Fig.5 eingesetzt werden, beliebig variiert werden.

Die. **Figur 6** zeigt eine vorteilhafte Befestigung des Hackmessers 14 an der Welle 57. Die Welle 57 ist in dem Gehäuse 29 angeordnet,wie Fig.5 zeigt. Das Hackmesser 14 ist mittels zweier als Schrauben 58 ausgebildeter Befestigungsmittel an der Befestigungshülse 59 angeschraubt. Die Befestigungshülse 59 ist mittels der Schraube 60 an der Welle 57 befestigt. Zwischen dem Schraubenkopf 61 der Schraube 60 und der Hülse 59 einerseits und der Welle 57 und der Hülse 59 andererseits sind elastische Manschetten 62 bzw. 63 angeordnet. Somit ist also das Hackmesser 14 gegenüber der Welle 57 federnd und elastisch bewegbar aufgehängt.

Durch die elastisch gepufferte Aufhängung der Hülse 59 ist das Hackmesser 14 begrenzt beweglich und rückfedernd an der Welle 57 befestigt. Durch die Befestigungsschraube 60 kann die Federung des Messers 14 eingestellt werden. Vorzugsweise ist eine selbstsichernde Schraube 60 vorgesehen. Somit ist über selbstsichernde Schraube 60 die Elastizität der Verbindung veränderbar. Die Beweglichkeit dieser Verbindung ermöglicht beim Betrieb einen Steinschutz sowie eine vertikal wippende Arbeitsbewegung des Hackmessers 14.

Die Hülse 59 kann in bevorzugter Weise aus Gewichtseinsparungsgründen, und damit sie eine hohe Glätte an ihrer Oberfläche aufweist, aus einem technischen Porzellan- oder einem Kunststoffmaterial hergestellt werden. Das Hackmesser 14 kann von der Befestigungsstelle zum Bearbeitungsteil hin nach unten abgebogen sein, damit das Getriebe einen ausreichend großen Abstand zur Bodenoberfläche erhält.

Durch eine im Querschnitt ovale Ausformung der Hülse wird erreicht, daß sich das Hackmesser 14 nicht frei drehen kann, sondern nur um etwa 5-10 Grad zu beiden Seiten ausschwenken kann. Somit weicht es im Normalbetrieb fast nicht, aber abhängig von der Festigkeit der Schraube und der Elastizitätsverbindung beim Zusammentreffen mit einem harten Gegenstand um etwa 10-20 Grad aus. Im Zusammenwirken der vom Getriebe erzeugten Pendelbewegung und der eingeschränkten durch Massenkräfte hervorgerufenen Eigenbewegung des Messers 14 pendelt die Messerspitze am Ende jeder Arbeitsbewegung auf- und abwärts, wodurch aufliegende Erd- und Beikrautteile abgeworfen werden.

## Patentansprüche

1. Bearbeitungsmaschine für Reihenkulturen, wie beispielsweise Mais, Zuckerrüben, Ackerbohnen, wobei jeder Reihe mindestens ein die Positionen der einzelnen Pflanzen in der Reihe erfassender Sensor und ein in Abhängigkeit von dem Signal des Sensors gesteuerte Bearbeitungsvorrichtung zugeordnet sind, wobei die Bearbeitungsvorrichtung (12) ein etwa horizontal geführtes, zwischen den einzelnen Pflanzen (1) der Reihe (5) flach in den Boden eingreifendes Hackmesser (14) aufweist,
**dadurch gekennzeichnet**, daß das Hackmesser (14) an einem permanent angetriebenen Rotor (31,32) gelagert ist und daß das Hackmesser (14) über ein Getriebe mit einer koaxial zu der Drehachse des Rotors angeordneten Welle (37) verbunden ist, die wechselweise feststellbar bzw. an den Antrieb (30) des Rotors ankuppelbar ist, wobei das Hackmesser (14) im festgestellten Zustand der Welle (37) eine seitlich über den Rotor (31,32) hinausgehende Hackbewegung vollführt und im angekuppelten Zustand der Welle (37) vorzugsweise innerhalb des Rotors (31,32) mit diesem umläuft.

2. Bearbeitungsmaschine nach Anspruch 1, **dadurch gekennzeichnet**, daß das Hackmesser (14) gegenüber dem Rotor (31, 32) vorzugsweise mittels einer Justiereinrichtung (51) in seiner Arbeitsrichtung einstellbar ist.

3. Bearbeitungsmaschine nach Anspruch 1 und 2 **dadurch gekennzeichnet**, daß das Hackmesser (14) gegenüber der koaxial umlaufenden Welle (37) und/oder dem Rotor (31,32) begrenzt federnd und/oder elastisch angeordnet ist.

4. Bearbeitungsmaschine nach Anspruch 3, **dadurch gekennzeichnet**, daß das Hackmesser (14) an einer Welle (57) befestigt ist, und daß zwischen der Welle (57) und dem Hackmesser (14) zumindest ein elastisches Element (62,63) angeordnet ist.

5. Bearbeitungsmaschine nach Anspruch 4, **dadurch gekennzeichnet** daß das Hackmesser (14) gegenüber der Welle (57) begrenzt federnd und elastisch aufgehängt ist und die Steifigkeit der Befestigung mittels einer Schraube (60) einstellbar ist.

6. Bearbeitungsmaschine nach Anspruch 5, **dadurch gekennzeichnet** daß das Hackmesser (14) während des Arbeitens eine stechende und dabei leicht auf- und abschwingende Arbeitsbewegung (52a) vollführt.

7. Bearbeitungsmaschine nach Anspruch 1, **dadurch gekennzeichnet** daß während des Vorrückens des arbeitenden Hackmessers (14) aus der zentralen Position in die äußere Position zwischen die Pflanzen (1) und bei gleichzeitiger Vorfahrt (53) der Bearbeitungsmaschine (3) die Hackmesserspitze abhängig von der Einstellung der Justiereinrichtung (51) sich näherungsweise auf einer Linie (X₀) quer zur Fahrtrichtung bewegt, also der Vorfahrt (53) nacheilt.

## Claims

1. Cultivating apparatus for row cropping, such as maize, sugar beets, field beans, whereby each row is assigned at least one sensor recognising the position of individual plants in the row and one cultivating device controlled by the signal of the sensor. The cultivating device (12) is fitted with a nearly horizontally set hoeing knife (14) driving into the soil at a shallow angle between the individual plants (1) in the row (5), distinguished by the fact that the hoeing knife (14) is fitted to a permanently driven rotor (31, 32) and that the hoeing knife (14) is connected via a set of gears to a shaft (37), set coaxially to the swivelling axis of the rotor, which can be alternatively locked, that is, it can be coupled to the driving gear (30) of the rotor, whereby the hoeing knife (14), in the locked position of the shaft (37), makes a hoeing movement reaching beyond both sides of the rotor (31,32), and in the coupled position of the shaft (37) rotates mainly within and with the rotor (31,32).

2. Cultivating apparatus as per claim 1, distinguished by the fact that the operating direction of the hoeing knife (14) against the rotor (31,32) can be set mainly with an adjustment device (51)

3. Cultivating apparatus as per claim 1and 2, distinguished by the fact that the hoeing knife (14) against the coaxially rotating shaft (37), and/or the rotor (31,32), is positioned in a limited springy and/or elastic manner.

4. Cultivating apparatus as per claim 4, distinguished by the fact that the hoeing knife (14) is fixed to a shaft (57) and that between the shaft (57) and the hoeing knife (14) at least one elastic element (62,63) is positioned.

5. Cultivating apparatus as per claim 4, distinguished by the fact that the hoeing knife (14) is mounted to the shaft (57) in a limited springy and elastic manner and the rigidity of the mounting is adjustable with a screw (60).

6. Cultivating apparatus as per claim 5, distinguished by the fact that the hoeing knife (14) during operation executes a stabbing and thereby slight up- and down swinging movement (52a).

7. Cultivating apparatus as per claim 1, distinguished by the fact that during the advance of the operating hoeing knife (14) from a central position to the outer position between the plants (1) and simultaneous forward movement (53) of the cultivating apparatus (3), the point of the hoeing knife, depending on the setting of the adjustment device (51), moves by approximation on a line (Xo) across the direction of motion, that is, it follows the forward movement (53).

## Revendications

1. Machine de traitement pour les cultures en lignes, comme le maïs, la betterave à sucre, la féverole commune, chaque ligne comportant au moins un capteur détectant la position des plantes dans la ligne et un dispositif de travail dirigé en fonction du signal délivré par le capteur. Le dispositif de travail (12) comporte un hachoir (14) soutenu horizontalement et pénétrant de manière plate dans le sol entre les différentes plantes (1) de la ligne (5). Cette machine est **caractérisée par le fait** que le hachoir (14) est fixé à un rotor (31, 32) commandé en permanence, et qu'il est relié par une transmission à un arbre (37) fixé de manière coaxiale par rapport à l'axe de rotation du rotor ; cet arbre peut être soit bloqué, soit accouplé à l'entraînement (30) du rotor. Lorsque l'arbre (37) est bloqué, le hachoir (14) accomplit un mouvement hachant latéral passant par-dessus le rotor (31, 32), alors que lorsque l'arbre (37) est accouplé, il tourne de préférence à l'intérieur du rotor (31, 32) avec celui-ci.

2. Machine de traitement d'après les besoins n° 1, **caractérisée par le fait** que le sens de fonctionnement du hachoir (14) peut être réglé en face du rotor (31, 32) de préférence au moyen d'un dispositif de réglage (51).

3. Machine de traitement d'après les besoins n° 1 et 2, **caractérisée par le fait** que le hachoir (14) est placé, par rapport à l'arbre (37) tournant de manière coaxiale et/ou au rotor (31, 32), de façon plus ou moins élastique.

4. Machine de traitement d'après les besoins n° 3, **caractérisée par le fait** que le hachoir (14) est fixé à un arbre (57), et qu'au moins un élément élastique (62, 63) est placé entre l'arbre (57) et le hachoir (14).

5. Machine de traitement d'après les besoins n° 4, **caractérisée par le fait** que le hachoir (14) est placé de manière plus ou moins élastique par rapport à l'arbre (57), et que la rigidité de la fixation peut être réglée au moyen d'une vis (60).

6. Machine de traitement d'après les besoins n° 5, **caracterisée par le fait** que le hachoir (14) exerce un mouvement (52a) perçant et légèrement montant et descendant pendant le fonctionnement.

7. Machine de traitement d'après les besoins n° 1, **caracterisée par le fait** que, pendant que lé hachoir (14) se déplace de la position centrale vers la position extérieure entre les plantes (1), et pendant qu'en même temps la machine (3) avance (53), la pointe du hachoir se déplace approximativement sur une ligne (X₀) perpendiculairement au sens de la marche, en fonction du réglage effectué sur le dispositif (51), donc qu'elle anticipe l'avancée (53) de la machine.
